# EUROPÄISCHE PATENTSCHRIFT

(11) **EP 2 317 143 B1**
(45) Veröffentlichungstag und Bekanntmachung des Hinweises auf die Patenterteilung: **11.01.2017**
(21) Anmeldenummer: 10014006.0
(22) Anmeldetag: 27.10.2010
(51) Int. Cl.: F04C 2/107

(54) **Exzenterschneckenpumpe**
Progressive cavity pump
Pompe à vis excentrique

(30) Priorität: 30.10.2009 DE 202009014663 U
(43) Veröffentlichungstag der Anmeldung: 04.05.2011
(73) Patentinhaber: J. Wagner GmbH, 88677 Markdorf (DE)
(72) Erfinder: Jeltsch, Thomas, 88048 Friedrichshafen (DE); Schnittger, Thorsten, 88677 Markdorf (DE)
(74) Vertreter: Otten, Roth, Dobler & Partner mbB Patentanwälte

(56) Entgegenhaltungen:
- EP-A1- 1 887 223
- EP-A1- 1 914 426
- US-A- 3 354 537
- US-A- 4 140 444
- US-A1- 2003 103 856
- US-A1- 2009 136 371

## Beschreibung

Die Erfindung betrifft eine Vorrichtung zur Förderung von dickflüssigem Fördergut nach dem Oberbegriff des Anspruchs 1, Mörtelpumpe mit Exzenterschnecken sind aus dem Stand der Technik bekannt. Sie werden teilweise als Tauchpumpen konzipiert, welche mit einem Saug-Ende in ein Vorratsgefaß ragen, das Fördergut aus diesem Ansaugen und über eine Abgabeleitung an die Verarbeitungsstelle, insbesondere an eine Mörtelspritzapparatur fördern. Auch horizontale Mörtelpumpen sind bekannt, welche über eine Exzenterschnecke Mörtel aus einem Vorratsbehälter über einen Ansaugbereich entnehmen und diesen in einen Druckbereich zur Verarbeitung unter Druck transportieren. Insbesondere sind Aufbauten von Exzenterschneckenpumpen beispielsweise aus der US 4 140 444, der US 3 354 537 oder der US 2009/0136371 A1 bekannt.

US 4 140 444, die als nächstliegender Stand der Technik angesehen wird, offenbart eine Vorrichtung mit den Merkmalen des Oberbegriffs des Anspruchs 1.

Problematisch an den bekannten Geräten nach dem Stand der Technik ist die Reinigung der Exzenterschneckenpumpe. Hierbei muss der Rotor, welcher die Schnecke darstellt, vom Stator, in welchem die Schnecke läuft, getrennt werden. Da die Pumpenwirkung jedoch von einer elastisch dichtenden Deformation des Stators beim hindurchdrehen der Schnecke resultiert, bietet dieser einen erheblichen Widerstand bei der Demontage gegen ein einfaches Herausziehen der Schnecke dar. Aus dem Stand der Technik, beispielsweise aus der DE 103 37 382 A1 sind Vorrichtungen bekannt, welche diesen Widerstand überwinden. Diese sind jedoch teuer und müssen separat an dem zu reinigenden Gerät durch zusätzliche Arbeitsschritte angeordnet werden.

Die Erfindung hat sich nunmehr die Aufgabe gestellt, die Demontage einer entsprechenden Vorrichtung mit Exzenterschneckenpumpe zu vereinfachen.

Die Aufgabe wird ausgehend vom Oberbegriff des Anspruchs 1 durch die kennzeichnenden Merkmale des Anspruchs 1 gelöst. Vorteilhafte Weiterbildungen sowie zweckmäßige Ausgestaltungen sind in den abhängigen Ansprüchen angegeben.

Die Erfindung betrifft eine Vorrichtung zur Förderung von dickflüssigem Fördergut, beispielsweise Mörtel mittels einer Exzenterschneckenpumpe. Die Vorrichtung umfasst ein Gestell zur Aufnahme und Befestigung von Vorrichtungselementen, einen Pumpengehäuseabschnitt zur Aufnahme eines Stators und eines im Stator drehend gelagerten Rotors in Form einer Förderschnecke, einen Saugbereich zur Einleitung des Fördergutes, einen Druckbereich zur Ausgabe des Förderguts, eine elektrische Antriebseinheit zum rotierenden Antrieb des Rotors im Stator in einer ersten Drehrichtung zur Förderung des Förderguts, eine Steuerung zur Ansteuerung der Antriebseinheit sowie ein oder mehrere lösbare Haltemittel zur drehfesten und/oder ortsfesten Verbindung der Antriebseinheit und des Stators. Erfindungsgemäß ist realisiert, dass eine Drehrichtungsänderung g der elektrischen Antriebseinheit in eine zweite Drehrichtur bei gelösten Haltemitteln eine selbsttätige Trennung des Pumpengehäuseabschnitts mit dem Stator durch Herausschrauben des Rotors ausführt.

Unter der Antriebseinheit kann erfindungsgemäß eine Kombination eines Motors mit Getriebe und entsprechende Wellen und Lagern verstanden werden. Es sind jedoch auch Antriebseinheiten denkbar, welche über einen Direktantrieb mit ausreichendem Drehmoment bei der erforderlichen geringen Drehzahl direkt an den Rotor angreifen.

Das Lösen der ortsfixierenden Haltemittel bei Bereitstellung von drehfixierenden Haltemitteln erlaubt ein Herausschrauben der Exzenterschnecke aus dem Stator aufgrund der ineinander eingreifenden Geometrien. Dies wird insbesondere durch die erfindungsgemäßen Haltemittel und die ermöglichte Drehrichtungsumkehr der Antriebseinheit, ohne besonders aufwändige und dadurch störungsanfällige Schaltgetriebe oder Riemenantriebe realisiert.
In einer vorteilhaften Weiterbildung der Erfindung ist diese dadurch gekennzeichnet, dass am Pumpengehäuseabschnitt zwei radial nach außen gerichtete Bolzen angeordnet sind, welche den Pumpengehäuseabschnitt während des Trennvorgangs in Führungsmitteln am Gestell und/oder in einer Gehäusehülse und/oder einem weiteren Gehäuseabschnitt und/oder einem Motorgehäuse linear führen.

Diese Bolzen bilden die drehfixierenden Haltemittel aus, wobei sie zusätzlich als Aufnahme für Gewindestifte dienen können, welche in einer montierten Position als oxtsfixierende Haltemittel gemeinsam mit entsprechenden Hutmuttern, die Bolzen und damit den Pumpengehäuseabschnitt an der Antriebseinheit oder deren Gehäuse befestigen.

In einer vorteilhaften Weiterbildung der Erfindung ist diese dadurch gekennzeichnet, dass sich der Rotor während des Trennvorgangs des Pumpengehäuses am Stator abstützt und vorzugsweise diesen leicht elastisch deformiert.

Dieser Vorgang entspricht der üblichen Deformation beim Fördern in einer Exzenterschneckenpumpe, wobei beim Fördern die der Abstützung entgegenwirkende Kraft durch die ortsfixierenden Haltemittel aufgebracht werden muss.

In einher vorteilhafter. Weiterbildung der Erfindung ist diese dadurch gekennzeichnet, dass bei fixierten Haltemitteln der Rotor im Betrieb je nach Drehrichtung der Antriebseinheit einen Saug- oder einen Druckbetrieb ausbildet wodurch Saugbereich und Druckbereich getauscht werden.

Es ist mit der erfindungsgemäßen Pumpe auch möglich, vor der Demontage im System befindliches Fördergut zurück in den Vorratsbehälter zu fördern, und das System somit zu entleeren.

In einer vorteilhaften Weiterbildung der Erfindung ist diese dadurch gekennzeichnet, dass der Saugbereich in einem Winkel von ca. 90° zur Rotorachse angeordnet ist und einen vorzugsweise trichterförmigen Behälter zur Aufnahme des dickflüssigen Fördergutes an der Vorrichtung für den Druckbetrieb umfasst.

Auf diese Weise kann das Fördergut kontinuierlich nachgefüllt werden.

In einer vorteilhaften Weiterbildung der Erfindung ist diese dadurch gekennzeichnet, dass der Saugbereich in einer Verlängerung zur Rotorachse angeordnet ist und vorzugsweise in einen Behälter zur Aufnahme des dickflüssigen Fördergutes eintauchbar ist.

Diese Ausführung erlaube unter anderem eine Entnahme aus einem Mischbehälter oder einer Mischwanne.

In einer vorteilhaften Weiterbildung der Erfindung ist diese dadurch gekennzeichnet, dass der Saugbereich mit Anschlussmitteln an einen Container mit bevorratetem Fördergut, vorzugsweise einen Einwegcontainer ausgebildet ist.

Mehrwegcontainer mit industriell vorgefertigtem Fördergut wie beispielsweise Mörtel oder Putz können in entsprechenden Systemprogrammen vorgesehen sein, und mit speziellen Anschlussmitteln für Systemkonforme Fördereinrichtungen versehen werden. Auch Einwegcontainer, beispielsweise aus Karton-Verbundstoffen sind denkbar.

In einer vorteilhaften Weiterbildung der Erfindung ist diese dadurch gekennzeichnet, dass zwischen Antriebseinheit und Rotor in einem Einfüllbereich bzw. Saugbereich mindestens zwei einander folgende Wellendichtungen zur Abdichtung des Einfüllbereich gegenüber der Antriebseinheit vorgesehen sind.

Insbesondere wenn der Saugbereich sich am selben Wellenende des Rotors wie die Antriebseinheit befindet, ist eine optimale Abdichtung erforderlich. Durch die Exzenterschnecke wird im Saugbereich ein Unterdruck erzeugt, welcher ohne ausreichende Abdichtung zum Eintritt von Nebenluft führen könnte, uns somit Luftblasen im Fördergut eingeschossen würden.

In einer vorteilhaften Weiterbildung der Erfindung ist diese dadurch gekennzeichnet, die Antriebseinheit einen büstenloser Gleichstrommotor und vorzugsweise ein Getriebe umfasst. Insbesondere die Nutzung der Eigenschaften von bürstenlosen Gleichstrommotoren, wie beispielsweise das hohe Drehmoment bei geringen Drehzahlen macht die kostengünstige und gegenüber Störungen und Verschmutzungen unempfindliche Bauweise möglich. Eine Drehrichtungsumkehr ist dabei leicht uns kostengünstig zu realisieren, ohne dabei Leistungsminderungen in Kauf zu nehmen.

Nachfolgend soll die Erfindung kurz an den dargestellten Ausführungsbeispielen näher erläutert werden. Die Erfindung ist jedoch nicht auf die Beispiele beschränkt. Sie umfasst vielmehr alle Ausgestaltungen, die vom erfindungswesentlichen Gedanken gebrauch machen.

Es zeigen:
- Fig. 1: Eine Tauchmörtelpumpe in montiertem Zustand
- Fig. 2: Einen Schnitt durch die Exzenterschnecke
- Fig. 3: Eine Tauchmörtelpumpe mit demontiertem Stator
- Fig. 4: Einen Schnitt durch die Tauchmörtelpumpe
- Fig. 5: Eine Detaildarstellung der Haltemittel und des Druckbereichs
- Fig. 6: Eine Detaildarstellung der Dichtungen

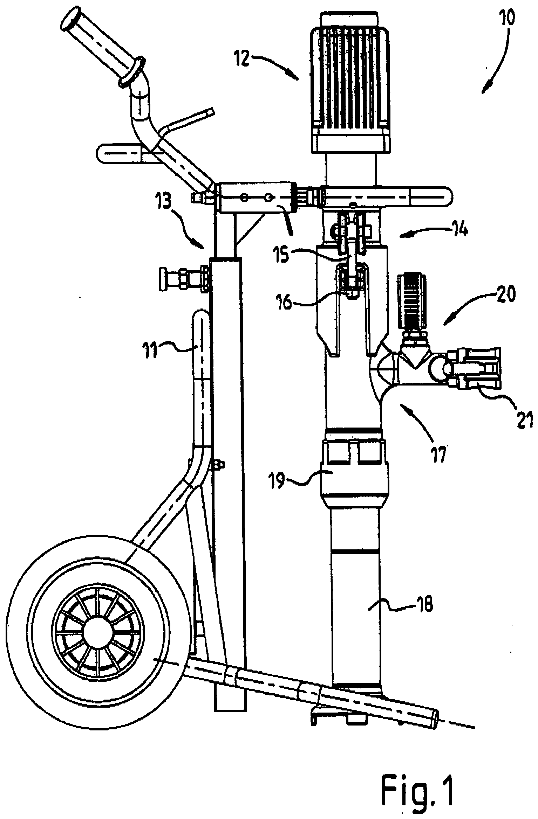

Im Einzelnen zeigt Figur 1 eine Tauchmörtelpumpe 10. Die Pumpe umfasst ein Gestell 11 an dessen oberen Ende die Antriebseinheit 12 befestigt ist. Das Gestell weist eine Teleskopanordnung 13 auf, welche das Einbringen der Pumpe in ein Vorratsbehältnis erleichtert (hier nicht dargestellt).

An einem oberen Gehäuseabschnitt 14 sind Gewindebolzen 15 vorgesehen welche schwenkbar gelagert sind. Die Gewindebolzen 15 bilden mit Hutmuttern 16 eine ortsfeste Verbindung zwischen dem oberen Gehäuseabschnitt und dem unteren Gehäuseabschnitt 17 aus. Der untere Gehäuseabschnitt 17 trägt an seinem unteren Ende einen Saugfortsatz 18 welcher in ein Behältnis eingetaucht wird. Der Saugfortsazt 18 ist über Befestigungsmittel 19 mit dem unteren Gehäuseabschnitt 17 verbunden. Oberhalb des Befestigungsmittels 19 ist der Druckbereich 20 mit Anschlussmitteln 21 für eine Druckleitung oder ein Arbeitsgerät ausgebildet.

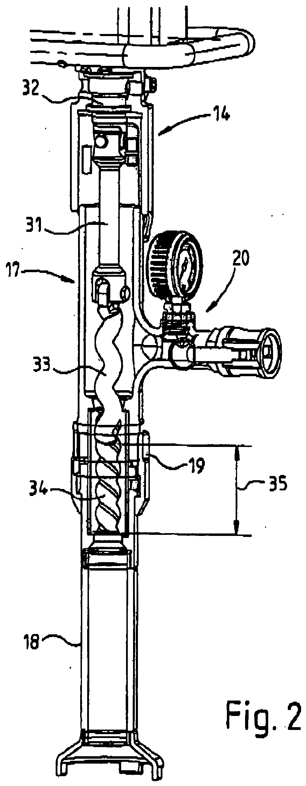

Figur 2 zeigt einen Querschnitt der Exzenterschneckenpumpe in einem teilweise demontierten Zustand. Im Inneren des oberen Gehäuseabschnitts 14 verläuft die Antriebswelle 31 der Antriebseinheit 12 und wird über Kopplungsmittel 32 mit der Exzenterschnecke 33 verbunden. Die Exzenterschnecke 33 verläuft innerhalb des Stators 34 und erzeugt nach dem Prinzip einer Exzenterschneckenpumpe einen Sog am Saugfortsatz 18 zur Förderung des Materials. In vorliegender Darstellung ist die Exzenterschnecke 33 bereits um die Strecke 35 aus dem Stator herausgeschraubt worden, was durch eine umgekehrte Drehrichtung der Antriebseinheit 12 als beim Förderbetrieb erreicht wurde. Hierzu wurden die Haltemittel entsprechend gelöst.

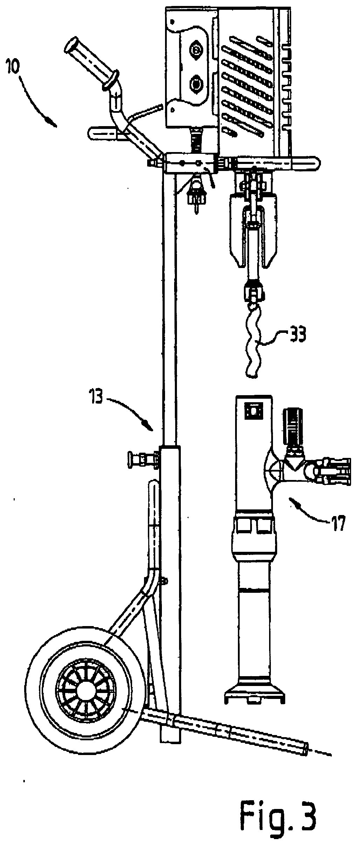

Figur 3 zeigt eine komplett vom Rotor (Exzenterschnecke 33) getrennte Anordnung des unteren Gehäuseabschnitts 17. Die Teleskopanordnung 13 ist hierbei ausgefahren.

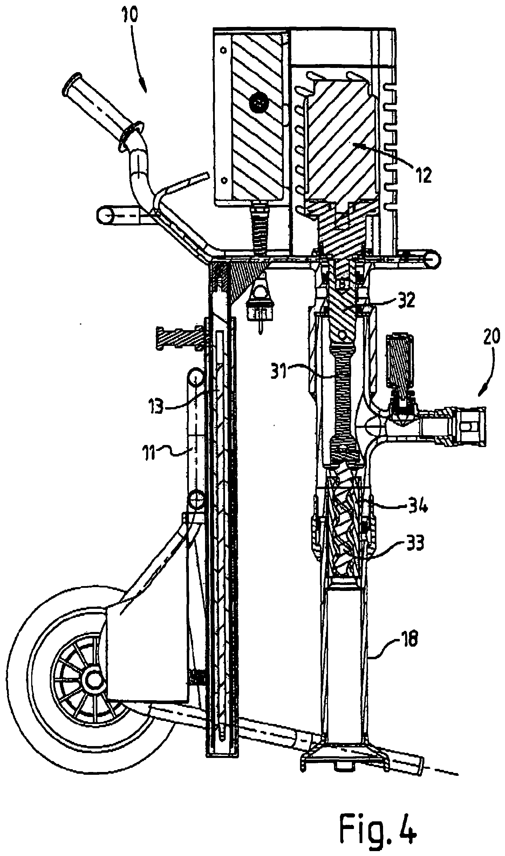

Figur 4 zeigt eine weitere detailiertere Darstellung der erfindungsgemäßen Mörtelpumpe im Querschnitt. Die Mörtelpumpe ist hierbei in einem vollständig zusammengebauten Zustand dargestellt.

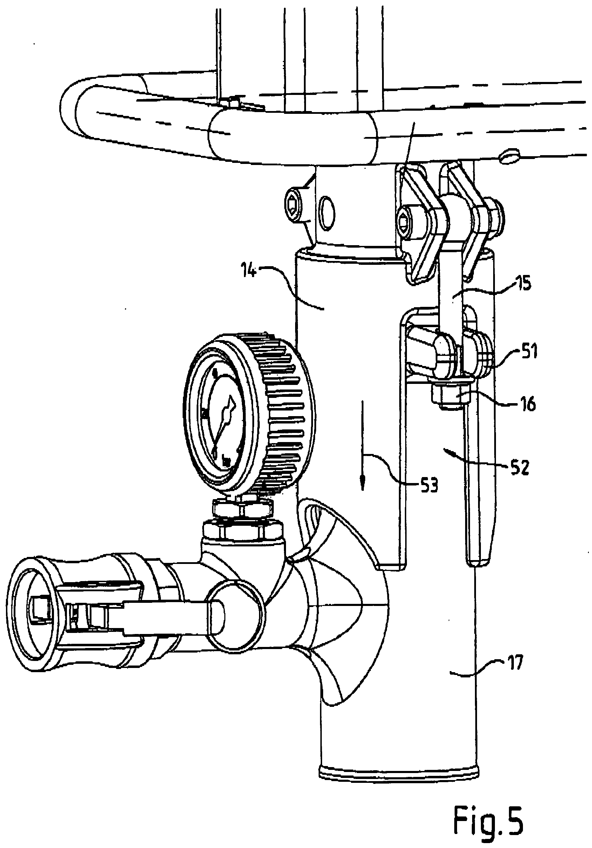

Figur 5 zeigt eine genauere Darstellung der erfindungsgemäßen Haltemittel. Der obere Gehäuseabschnitt 14 ist über Gewindebolzen 15, welche schwenkbar an diesem befestigt sind, mit dem unteren Gehäuseabschnitt 17 verbunden. Die Gewindebolzen 15 durchgreifen dabei radial, vom unteren Gehäuseabschnitt 17 nach außen gerichtete Bolzen 51, welche in einem Längsschlitz 52 im oberen Gehäuseabschnitt 14 laufen. Hergestellt wird die ortsfeste Verbindung des ortsfixierenden Haltemittels der Gewindebolzen 15 durch darauf aufgebrachte Hutmuttern 16, welche die Bolzen 51 fixieren. Ein lösen der Hutmuttern 16, welche vorzugsweise auf beiden gegenüberliegenden Seiten der Mörtelpumpe symmetrisch angeordnet sind, erlaubt es den Bolzen 51 sich entlang des Längsschlitzes 52 zu bewegen. Eine Drehbewegung des unteren Gehäuseabschnitts 17 gegenüber dem oberen Gehäuseabschnitt 14 ist jedoch bis zum Verlassen des Längsschlitzes 52 gehemmt, was das drehfixierende Haltemittel darstellt. Die Länge des Schlitzes 52 entspricht dabei in etwa der Länge der Exzenterschnecke 33, so dass sich diese vollständig aus dem Stator 34 herausschrauben kann, ohne dass der untere Gehäuseabschnitt 17 eine Drehbewegung ausführt.

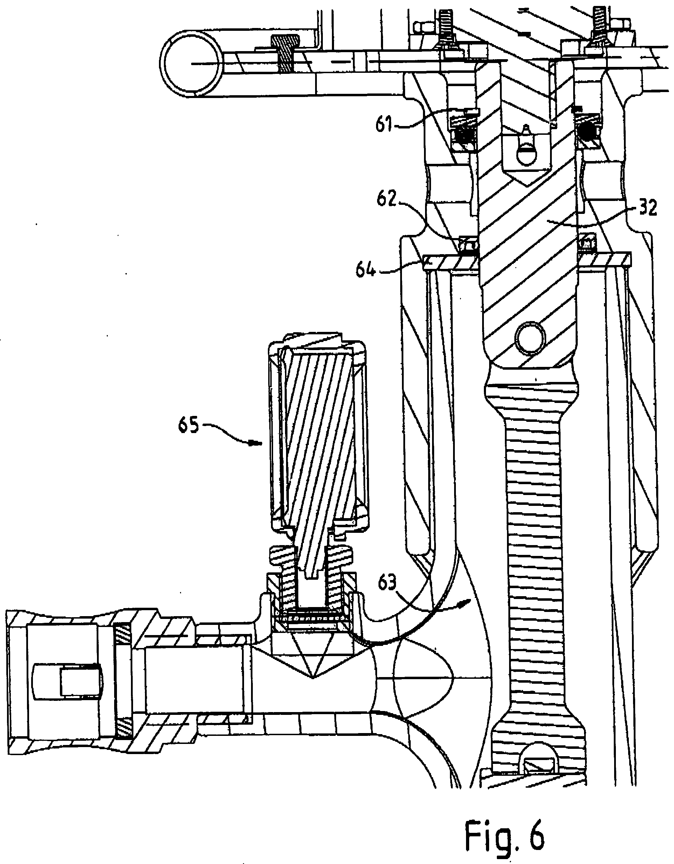

Figur 6 zeigt eine obere Dichtung 61 und eine untere Dichtung 62, welche den Druckbereich 63 im inneren der Pumpe gegenüber dem Antriebsbereich abdichten und die Antriebswelle 31 durchführen. Zusätzlich kann noch eine gröbere Materialdichtung 64 vorgesehen sein. Der Druckbereich verfügt über ein Kontrollmanometer 65, welches den erreichten Arbeitsdruck anzeigt.

### Bezugszeichenliste:

- 10: Tauchmörtelpumpe
- 11: Gestell
- 12: Antriebseinheit
- 13: Teleskopanordnung
- 14: Gehäuseabschnitt
- 15: Gewindebolzen
- 16: Hutmutter
- 17: Gehäuseabschnitt
- 18: Saugfortsatz
- 19: Befestigungsmittel
- 20: Druckbereich
- 21: Anachlussmittel
- 31: Antriebswelle
- 32: Kopplungsmittel
- 33: Exzenterschnecke
- 34: Stator
- 35: Strecke
- 51: Bolzen
- 52: Längsschlitz
- 53: Strecke
- 61: Dichtung
- 62: untere Dichtung
- 63: Druckbereich
- 64: Materialdichtung
- 65: Kontrollmanometer

## Patentansprüche

1. Vorrichtung zur Förderung von dickflüssigem Fördergut, beispielsweise Mörtel mittels einer Exzenterschneckenpumpe, umfassend
- ein Gestell zur Aufnahme und Befestigung von Vorrichtungselementen,
- einen Pumpengehäuseabschnitt zur Aufnahme eines Stators und eines im Stator drehend gelagerten Rotors in Form einer Förderschnecke,
- einen Saugbereich zur Einleitung des Fördergutes,
- einen Druckbereich zur Ausgabe des Förderguts,
- eine elektrische Antriebseinheit zum rotierenden Antrieb des Rotors im Stator in einer ersten Drehrichtung zur Förderung des Förderguts,
- eine Steuerung zur Ansteuerung der Antriebseinheit,
- ein oder mehrere lösbare Haltemittel zur drehfesten und/oder ortsfesten Verbindung der Antriebseinheit und des Stators wobei eine Drehrichtungsänderung in eine zweite Drehrichtung der elektrischen Antriebseinheit bei gelösten Haltemitteln eine selbsttätige Trennung des Pumpengehäuseabschnitts mit dem Stator durch Herausschrauben des Rotors ausführt,
**dadurch gekennzeichnet, dass**
am Pumpengehäuseabschnitt zwei radial nach außen gerichtete Bolzen angeordnet sind, welche den Pumpengehäuseabschnitt während des Trennvorgangs in Führungsmitteln am Gestell und/oder in einer Gehäusehülse und/oder einem weiteren Gehäuseabschnitt und/oder einem Motorgehäuse linear führen.

2. Vorrichtung nach einem der vorhergehenden Ansprüche, **dadurch gekennzeichnet, dass** sich der Rotor während des Trennvorgangs des Pumpengehäuses am Stator abstützt und vorzugsweise diesen leicht elastisch deformiert.

3. Vorrichtung nach einem der vorhergehenden Ansprüche, **dadurch gekennzeichnet, dass** bei fixierten Haltemitteln der Rotor im Betrieb je nach Drehrichtung der Antriebseinheit einen Saug- oder einen Druckbetrieb ausbildet wodurch Saugbereich und Druckbereich getauscht werden.

4. Vorrichtung nach einem der vorhergehenden Ansprüche, **dadurch gekennzeichnet, dass** der Saugbereich in einem Winkel von ca. 90° zur Rotorachse angeordnet ist und einen vorzugsweise trichterförmigen Behälter zur Aufnahme des dickflüssigen Fördergutes an der Vorrichtung für den Druckbetrieb umfasst.

5. Vorrichtung nach einem der vorhergehenden Ansprüche, **dadurch gekennzeichnet, dass** der Saugbereich in einer Verlängerung zur Rotorachse angeordnet ist und vorzugsweise in einen Behälter zur Aufnahme des dickflüssigen Fördergutes eintauchbar ist.

6. Vorrichtung nach einem der vorhergehenden Ansprüche, **dadurch gekennzeichnet, dass** der Saugbereich mit Anschlussmitteln an einen Container mit bevorratetem Fördergut, vorzugsweise einen Einwegcontainer ausgebildet ist.

7. Vorrichtung nach einem der vorhergehenden Ansprüche, **dadurch gekennzeichnet, dass** zwischen Antriebseinheit und Rotor in einem Einfüllbereich bzw. Saugbereich mindestens zwei einander folgende Wellendichtungen zur Abdichtung des Einfüllbereichs gegenüber der Antriebseinheit vorgesehen sind.

8. Vorrichtung nach einem der vorhergehenden Ansprüche, **dadurch gekennzeichnet**, die Antriebseinheit einen büstenloser Gleichstrommotor und vorzugsweise ein Getriebe umfasst.

## Claims

1. A device for the conveyance of viscous material to be conveyed, for example, mortar by means of a progressive cavity pump, comprising
- a frame for receiving and mounting device elements,
- a pump housing section for receiving a stator and a rotor rotary-mounted in the stator in the form of a conveying screw,
- a suction area for introducing the material to be conveyed,
- a pressure area for the output of the material to be conveyed,
- an electrical drive unit for the rotating drive of the rotor in the stator in a first direction of rotation to the conveyance of the material to be conveyed,
- a control for the activation of the drive unit,
- one or several detachable holding means for the torque proof and/or stationary connection of the drive unit and the stator, wherein a change in the direction of rotation into a second direction of rotation of the electrical drive unit in the case of a detached holding means performs an automatic separation of the pump housing section with the stator by unscrewing the rotor,
**characterized in that**
on the pump housing section two bolts directed radially outwards are arranged, which guide the pump housing section during the separation process linearly in guidance means on the frame and/or in a housing sleeve and/or a further housing section and/or a motor housing.

2. A device according to one of the preceding claims, **characterized in that** the rotor is supported during the separation process of the pump housing on the stator and preferably slightly elastically deforms the latter.

3. A device according to one of the preceding claims, **characterized in that** in the case of fixed holding means the rotor during operation depending on the direction of rotation of the drive unit forms a suction operation or a pressure operation, whereby the suction area and pressure area are exchanged.

4. A device according to one of the preceding claims, **characterized in that** the suction area is arranged at an angle of approx. 90° to the rotor axis and comprises a preferably funnel-shaped container for receiving the viscous material to be conveyed on the device for the pressure operation.

5. A device according to one of the preceding claims, **characterized in that** the suction area is arranged in an extension to the rotor axis and preferably can be immersed into a container for the reception of the viscous material to be conveyed.

6. A device according to one of the preceding claims, **characterized in that** the suction area is formed with connection means on a container with stocked material to be conveyed, preferably a one-way container.

7. A device according to one of the preceding claims, **characterized in that** between the drive unit and rotor in a filling area or suction area at least two successive shaft seals are provided for sealing the filling area against the drive unit.

8. A device according to one of the preceding claims, **characterized in that** the drive unit comprises a brushless DC motor and preferably a gear.

## Revendications

1. Dispositif de refoulement d'un produit visqueux, par exemple du mortier au moyen d'une pompe à vis excentrique, comprenant :
- un châssis pour le logement et la fixation d'éléments du dispositif
- une portion de carter de pompe pour le logement d'un stator et d'un rotor logé de manière rotative dans le stator sous la forme d'une vis sans fin,
- une zone d'aspiration pour l'introduction du produit,
- une zone de pression pour la distribution du produit,
- une unité d'entraînement électrique pour l'entraînement en rotation du rotor dans le stator dans un premier sens de rotation pour le refoulement du produit,
- un dispositif de commande pour la commande de l'unité d'entraînement,
- un ou plusieurs moyens de maintien détachables pour la liaison solidaire en rotation et/ou stationnaire de l'unité d'entraînement et du stator, une variation du sens de rotation vers un deuxième sens de rotation de l'unité d'entraînement électrique lorsque les moyens de maintien sont détachés provoquant une séparation automatique de la portion de carter de pompe avec le stator par dévissage du rotor,
**caractérisé en ce que**
sur la portion de carter de pompe, sont disposées deux tiges orientées radialement vers l'extérieur, qui guident linéairement la portion du carter de pompe pendant le processus de séparation dans les moyens de guidage sur le châssis et/ou dans une gaine de carter et/ou une autre portion de carter et/ou un carter de moteur.

2. Dispositif selon l'une des revendications précédentes, **caractérisé en ce que** le rotor s'appuie, pendant le processus de séparation du carter de pompe, contre le stator et de préférence déforme celui-ci de manière légèrement élastique.

3. Dispositif selon l'une des revendications précédentes, **caractérisé en ce que**, lorsque les moyens de maintien sont fixés, le rotor constitue, lors du fonctionnement, selon le sens de rotation de l'unité d'entraînement, un fonctionnement d'aspiration ou un fonctionnement de pression, la zone d'aspiration et la zone de pression étant changées.

4. Dispositif selon l'une des revendications précédentes, **caractérisé en ce que** la zone d'aspiration forme un angle d'environ 90° par rapport à l'axe du rotor et comprend un récipient en forme d'entonnoir pour le logement du produit visqueux au niveau du dispositif pour le fonctionnement en pression.

5. Dispositif selon l'une des revendications précédentes, **caractérisé en ce que** la zone d'aspiration est disposée dans un prolongement de l'axe du rotor et peut être immergée dans un récipient pour le logement du produit visqueux.

6. Dispositif selon l'une des revendications précédentes, **caractérisé en ce que** la zone d'aspiration est munie de moyens de raccordement au niveau d'un conteneur avec une réserve de produit, de préférence un conteneur à usage unique.

7. Dispositif selon l'une des revendications précédentes, **caractérisé en ce que**, entre l'unité d'entraînement et le rotor, dans une zone de remplissage ou une zone d'aspiration, se trouvent au moins deux joints d'étanchéité d'arbres pour l'étanchéification de la zone de remplissage par rapport à l'unité d'entraînement.

8. Dispositif selon l'une des revendications précédentes, **caractérisé en ce que** l'unité d'entraînement comprend un moteur à courant continu sans balais et de préférence une transmission.
